**Europäisches Patentamt**

**European Patent Office**

**Office européen des brevets**

(19)

(11) Veröffentlichungsnummer : **0 220 468**
**B1**

(12)

# EUROPÄISCHE PATENTSCHRIFT

(45) Veröffentlichungstag der Patentschrift :
30.08.89

(21) Anmeldenummer : 86112864.3

(22) Anmeldetag : 17.09.86

(51) Int. Cl.⁴ : **F 01 N 3/28, B 01 J 35/04**

(54) **Aus Blechen gewickelter oder geschichteter metallischer Katalysatorträgerkörper mit Doppel- oder Mehrfachwellenstruktur.**

(30) Priorität : 30.09.85 DE 3534904

(43) Veröffentlichungstag der Anmeldung :
06.05.87 Patentblatt 87/19

(45) Bekanntmachung des Hinweises auf die Patenterteilung : 30.08.89 Patentblatt 89/35

(84) Benannte Vertragsstaaten :
AT BE CH DE FR GB IT LI LU NL SE

(56) Entgegenhaltungen :
FR—A— 2 321 346
US—A— 2 644 777
US—A— 4 382 323

(73) Patentinhaber : INTERATOM Gesellschaft mit beschränkter Haftung
Friedrich-Ebert-Strasse
D-5060 Bergisch-Gladbach 1 (DE)

(72) Erfinder : Cyron, Theodor
Kurt-Schumacher-Strasse 12
D-5060 Bergisch Gladbach (DE)

(74) Vertreter : Mehl, Ernst, Dipl.-Ing. et al
Postfach 22 13 17
D-8000 München 22 (DE)

EP 0 220 468 B1

**Beschreibung**

Die vorliegende Erfindung betrifft einen metallischen Katalysatorträgerkörper nach dem Oberbegriff des Anspruchs 1. Solche Katalysatorträgerkörper werden vorzugsweise zur Reinigung von Abgasen von Verbrennungsmotoren eingesetzt und sind dementsprechend hohen thermischen Belastungen ausgesetzt.

Aus der DE-A-33 12 944 ist bereits ein spannugsentlastetes Metallträgergehäuse für Abgaskatalysatoren mit hoher thermischer Betriebsbelastung bekannt, welcher aus abwechselnden Blechlagen eines glatten und eines gewellten Bleches besteht, wobei fügetechnische Verbindungen nur an bestimmten Berührungsstellen zwischen den beiden Blechlagen vorgesehen sind. Ein solcher Katalysatorträgerkörper ist jedoch nur mit einer aufwendigen Belotungstechnik herstellbar und im fertigen Zustand auch nur begrenzt elastisch.

Aus der DE-C-27 59 559 ist ferner ein aus zwei abwechselnden Blechlagen geschichteter metallischer Katalysatorträgerkörper bekannt, bei dem beide Blechlagen eine unterschiedliche Struktur aufweisen. Abgesehen von den Schwierigkeiten bei der Herstellung der dort beschriebenen Struktur weist ein solcher Katalysatorträgerkörper keine besondere Elastizität gegenüber thermischen Wechselbelastungen auf.

In der FR-A-2 321 346 wird bereits ein Katalysator-Trägerkörper vorgeschlagen, welcher eine Doppelwellenstruktur aufweist. Der vom Prinzip her aus glatten und gewellten Blechen spiralig aufgewickelte Körper weist zusätzlich zu einer ersten, die Wabenstruktur bestimmenden Wellung mit großer Wellenlänge und großer Amplitude eine den glatten und/oder gewellten Blechen zusätzlich aufgeprägte Wellung mit sehr viel kleinerer Wellenlänge und sehr viel kleinerer Amplitude auf, wodurch die für eine Beschichtung mit katalytisch aktivem Material zur Verfügung stehende Obefläche erheblich vergrößert wird. Eine solche Struktur ist jedoch wegen der auftretenden sehr kleinen Wellenlängen nur mit großem Aufwand herstellbar und nur unter Schwierigkeiten zu beschichten, da die sehr kleinen Strukturen teilweise durch das keramische Beschichtungsmaterial verstopft werden können. Die Zahl der Berührungsstellen zwischen den Blechlagen entspricht der Zahl der Kanäle des Wabenkörpers, so daß dieser zwar durch seine Doppelwellung eine gewisse Elastizität aufweist, jedoch immer noch einen starren Verbund bildet.

Aufgabe der vorliegenden Erfindung ist ein mit bekannten Mitteln einfach herstellbarer metallischer Katalysator-Trägerkörper, welcher in fertig gewickeltem oder geschichtetem Zustand keinen starren Verhund aller Kanalwände aufweist, sondern eine gewisse Elastizität zur Kompensation · thermischer Spannungen hat.

Zur Lösung dieser Aufgabe wird ein Katalysatorträgerkörper aus zwei abwechselnden Blechlagen unterschiedlicher Struktur mit den kennzeichnenden Merkmalen des Anspruchs 1 vorgeschlagen.

Entscheidend ist, daß die beiden Blechlagen zumindest in Teilbereichen gegeneinander eine Doppel- oder Mehrfachwellenstruktur aufweisen, wobei dies entweder durch entsprechende Welligkeit beider Blechlagen oder durch eine Doppel- bzw. Mehrfachwellenstruktur nur einer Blechlage erreicht werden kann. Durch eine solche Doppel- bzw. Mehrfachwellenstruktur wird erreicht, daß die Anzahl der Berührungsstellen zwischen den beiden Blechlagen verringert ist und in einzelnen Teilbereichen Abstände zwischen den beiden Blechlagen bleiben, wodurch die Elastizität der entstehenden Struktur entscheidend verbessert wird, ohne daß sich die sonstigen Eigenschaften verschlechtern. Die in Teilbereichen entstehenden Spalte zwischen den einzelnen Blechlagen können sogar zu einer zusätzlichen Verwirbelung hindurchströmender Gase führen, was durchaus erwünscht ist. Wie anhand der Zeichnung noch näher erläutert wird, gibt es verschiedene Wege, um eine Doppel- oder Mehrfachwellenstruktur zwischen den Blechlagen zu erreichen und diese zu beschreiben. Unter Wellenstruktur ist im folgenden nicht grundsätzlich nur eine sinusförmige Struktur zu verstehen, sondern auch jede andere periodische Struktur, sei es eine zickzack- oder trapezförmige Verformung der Bleche. Außerdem braucht die Mehrfachstruktur sich nicht über den gesamten Katalysatorträgerkörper zu erstrecken. Eine Elastizität von Teilbereichen, insbesondere den äußeren Lagen im Mantelbereich, genügt für die meisten Anforderungen. In allen Fällen soll die Wellenlänge mit der größten Amplitude die Wabenstruktur des Katalysatorträgerkörpers bestimmen, während alle übrigen Wellungen deutlich längere, zumindest aber nicht wesentlich kleinere Wellenlängen haben. Unter diesen Bedingungen lassen sich die Strukturen z. B. mit nur einem Zahnwalzenpaar und in den gewünschten Dimensionen der Wabenkanäle von z. B. etwa 1 - 3 mm² wirtschaftlich herstellen.

In spezieller Ausgestaltung der Erfindung wird im Anspruch 2 vorgeschlagen, daß eine der Blechlagen des Katalysatorträgerkörpers ein glattes Blech und die andere eine doppelt gewelltes Blech sein soll. Dabei bedeutet doppelt gewelltes Blech, daß dieses Blech zwei sich überlagernde oder abwechselnde Wellungen verschiedener Amplitude und/oder Wellenlänge aufweist.

In weiterer Ausgestaltung dieses Gedankens wird im Anspruch 3 vorgeschlagen, daß das doppelt gewellte Blech die Struktur zweier überlagerter Wellen aufweist, deren erste eine erheblich größere Amplitude hat als die zweite und wobei die Wellenlänge der zweiten ein Vielfaches der halben Wellenlänge der ersten Welle beträgt. Es hat sich z. B. als geeignet erwiesen, das Verhältnis der Amplituden größer als 5 :1, vorzugsweise etwa 10 :1 zu wählen. Ein geeignetes Verhältnis der Wellenlängen ist beispielsweise 3 :1, d. h. die längere Wellenlänge beträgt das Sechsfache der halben Wellenlänge der kürzeren. Andere Verhältnisse sind jedoch möglich.

Als alternative Ausgestaltung der Erfindung wird im Anspruch 4 vorgeschlagen, daß das doppelt gewellte Blech die Struktur zweier sich abwechselnder Wellen unterschiedlicher Amplituden und eventuell unterschiedlicher Wellenlängen aufweist, wobei sich jeweils eine halbe Wellenlänge oder Vielfache davon jeder der Wellen abwechseln. Diese anhand der Zeichnung näher erläuterte Ausführungsform überschneidet sich teilweise mit den Ausführungsformen gemäß dem Anspruch 3, so daß es sich für solche Fälle nur um eine unterschiedliche Beschreibung der Gegebenheiten handelt. Beide Ausführungsformen gemäß den Ansprüchen 3 und 4 lassen sich beispielsweise durch ineinandergreifende Zahnwalzen mit unterschiedlichen Zahnhöhen herstellen, sofern nur der Walzenumfang und die beteiligten Wellenlängen entsprechend abgestimmt sind.

In anderer Ausgestaltung der Erfindung wird im Anspruch 5 vorgeschlagen, daß beide abwechselnden Blechlagen eine Wellenstruktur aufweisen, wobei die Amplitude der Wellenstruktur der einen Blechlage viel kleiner ist als die Amplitude der Wellenstruktur der anderen Blechlage, z. B. nur ein Fünftel oder ein Zehntel. Außerdem muß die Wellenlänge der Wellenstruktur der einen Blechlage mit der kleineren Amplitude erheblich größer sein als die Wellenlänge der Wellenstruktur der anderen Blechlage. Ein bestimmtes Verhältnis der Wellenlängen untereinander ist nicht nötig, so daß ein breiter Spielraum besteht. Beim spiraligen Aufwickeln Aufwickeln der beiden gewellten Blechlagen entsteht wiederum eine Struktur, bei denen in gewissen Abständen Berührungsstellen zwischen den beiden Blechlagen vorkommen, während in anderen Bereichen kleine Spalte zwischen den Blechlagen bestehen bleiben. Durch eine gewisse Vorspannung beim Aufwickeln können gewünschte Spaltbreiten recht genau eingestellt werden. Durch das spiralige Aufwickeln entsteht eine unregelmäßige Struktur, die sich von denen gemäß den Ansprüchen 1 - 4 dadurch unterscheidet, daß die Berührungspunkte der einzelnen Lagen unregelmäßiger verteilt sind. Trotzdem ergibt sich insgesamt der gleiche Effekt bezüglich der Elastizität und thermischen Belastbarkeit.

In weiterer Ausgestaltung der Erfindung wird in Anspruch 6 vorgeschlagen, daß die Berührungsstellen der Blechlagen fügetechnisch verbunden sind, vorzugsweise verlötet. Diese Ausgestaltung, welche im Ergebnis zu ähnlichen Vorteilen führt, wie sie in der DE-A-33 12 944 beschrieben sind, läßt sich bei dem erfindungsgemäßen Katalysatorträgerkörper sehr viel einfacher verwirklichen, als bei einfach gewellten Blechen. Entweder können die Wellenberge mit größerer Amplitude vor dem Aufwickeln selektiv belotet werden, oder die Berührungsstellen der Blechlagen werden nach dem Aufwickeln belotet oder anderweitig fügetechnisch verbunden. Ein solcher Katalysatorträgerkörper weist eine hohe mechanische Stabilität bei gleichzeitiger Elastizität auf. Thermische Spannungen und Wechselbelastungen, denen ein solcher Katalysatorträgerkörper ausgesetzt ist, insbesondere dann, wenn er in einem massiven Mantelrohr untergebracht ist, werden von der elastischen Struktur ohne Beschädigungen aufgenommen, so daß sich die Lebensdauer des Katalysatorträgerkörpers entscheidend erhöht.

Ausführungsbeispiele der Erfindung sind in der Zeichnung schematisch dargestellt und zwar als kleine stark vergrößerte Ausschnitte jeweils einer Schicht. Der Einfachheit halber wurde darauf verzichtet, den Ausschnitt jeweils gekrümmt darzustellen, wie es der Wirklichkeit bei spiralig aufgewickelten Katalysatorträgerkörpern entsprechen würde. Es zeigen

Figur 1 eine Schicht aus einem glatten und einem doppelt gewellten Blech, wobei die Doppelwellenstruktur durch Überlagerung zweier Wellen beschrieben werden kann,

Figur 2 einen Ausschnitt einer Schicht aus einem glatten und einem doppelt gewellten Blech, wobei die Doppelwellenstruktur durch abwechselnde Wellen unterschiedlicher Amplitude beschrieben werden kann,

Figur 3 und Figur 4 Ausführungsbeispiele der Erfindung mit zwei unterschiedlich stark gewellten Blechlagen, wobei in Figur 3 die eine Blechlage in Zick-Zack-Form gewellt ist, während in Figur 4 beide Blechlagen etwa Sinusform aufweisen.

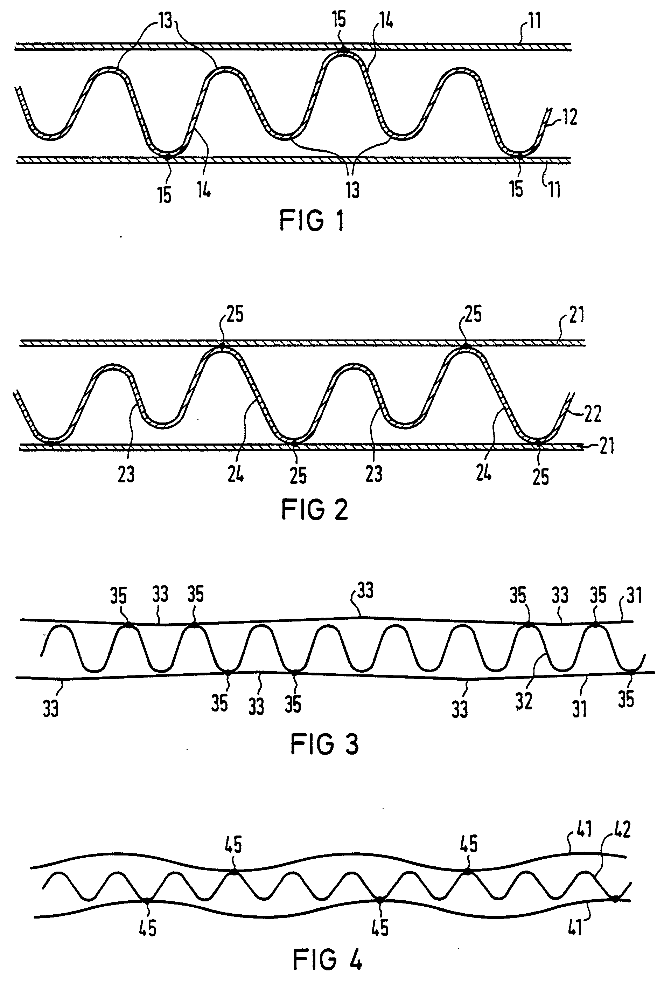

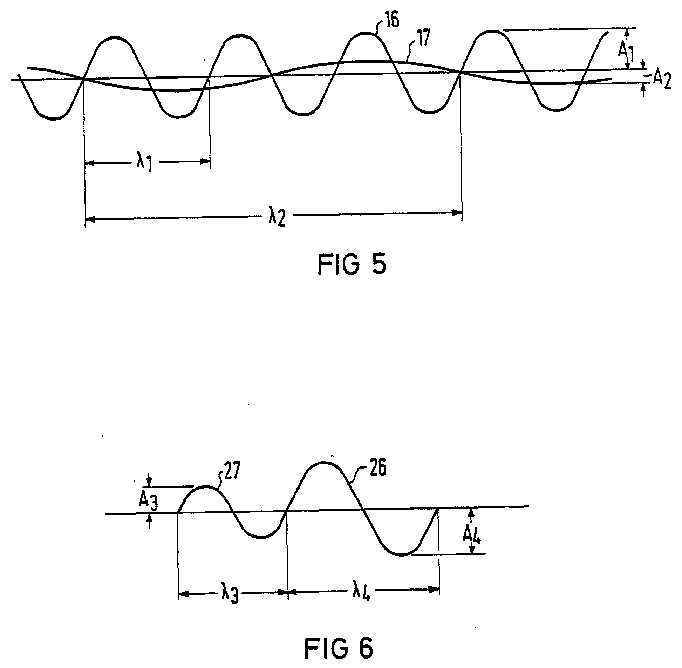

Anhand der Figuren 5 bzw. 6 werden die Doppelwellungen der Figuren 1 bzw. 2 näher veranschaulicht.

Figur 1 zeigt einen kleinen begradigten Abschnitt aus einem erfindungsgemäßen Katalysatorträgerkörper. Der Körper besteht aus abwechselnd gewickelten bzw. geschichteten glatten Blechen 11 und doppelt gewellten Blechen 12. Die Doppelwellung weist Wellenberge 13 auf, welche die benachbarte Lage 11 nicht berühren und Wellenberge 14, mit größerer Amplitude, welche die benachbarte glatte Lage 11 berühren. Die Berührungspunkte 15 können fügetechnisch verbunden sein. Dadurch, daß nicht jeder Wellenberg mit dem angrenzenden glatten Blech 11 verbunden ist, entsteht ein elastisches Gebilde, welches Dehnungen kompensieren kann. Die Entstehung einer solchen Doppelwellung kann anhand Figur 5 veranschaulicht werden. Durch Überlagerung einer Welle 16 mit der Wellenlänge $\lambda_1$ und der Amplitude $A_1$ einer Welle 17 mit der Wellenlänge $\lambda_2$ und der Amplitude $A_2$ entsteht die gewünschte Doppelwellung. Zu beachten ist dabei, daß das Verhältnis der Amplitude $A_1$ zu $A_2 > 5:1$, vorzugsweise $10:1$ sein sollte. Die Wellenlänge $\lambda_2$ sollte ein Vielfaches der halben Wellenlänge $\lambda_1$ sein, da sich dann eine solche Struktur mittels Zahnwalzen herstellen läßt. Bei anderen Herstellungsmethoden ist ein genaues Verhältnis der Wellenlängen nicht unbedingt nötig.

In Figur 2 ist eine etwas andere Form der Doppelwellung für ein gewelltes Blech 22 zwischen Lagen aus glatten Blechen 21 dargestellt. Bei diesem Ausführungsbeispiel wechseln sich Wellen 23 mit kleiner Amplitude und Wellen 24 mit großer Amplitude ab, so daß wiederum nicht alle Wellenberge die benachbarte glatte Blechlage 21 berühren. Die Berührungspunkte 25 können wiederum fügetechnisch verbunden sein. Es bleibt den jeweiligen Anforderungen an die Elastizität überlassen, wie viele Halbwellen kleiner Amplitude mit wie vielen Halbwellen großer Amplitude jeweils abwechselnd angeordnet werden. Figur 6 veranschaulicht den prinzipiellen Aufbau einer solchen Doppelwellenstruktur. Eine oder mehrere Halbwellen 27 mit kleiner Amplitude $A_3$ wechseln sich mit einer oder mehreren Halbwellen 26 großer Amplitude $A_4$ ab. Zusätzlich können die Wellenlänge $\lambda_3$ der Welle mit kleiner Amplitude $A_3$ und die Wellenlänge $\lambda_4$ der Welle 26 mit großer Amplitude $A_4$ unterschiedlich sein, je nach den Anforderungen und Herstellungsverfahren. Auch diese Doppelwellenstruktur läßt sich beispielsweise mit Hilfe von ineinandergreifenden Zahnwalzen herstellen.

Figur 3 zeigt ein anderes Ausführungsbeispiel der Erfindung, bei dem beide Blechlagen 31, 32 eine Wellenstruktur aufweisen. Das eine Band 31 weist eine Zick-Zack-Struktur mit Knickstellen 33 auf, während das andere Blechband 32 eine übliche Wellung aufweist. Die Zick-Zack-Wellung des einen Blechbandes 31 hat eine sehr viel größere Wellenlänge und eine sehr viel kleinere Amplitude als die Wellung des anderen Blechbandes 32. Eine genaue Beziehung der Wellenlängen und Amplitudenverhältnisse ist nicht notwendig, da beide Wellungen getrennt hergestellt werden und durch geeignete Vorspannung beim Aufwickeln die Amplituden noch beeinflußt werden können. Es entsteht wiederum eine Struktur, bei der nicht alle Wellenberge die angrenzenden Blechlagen berühren, so daß nur einzelne Berührungsstellen 35 auftreten, die gegebenenfalls fügetechnisch verbunden werden können.

In Figur 4 ist ein sehr ähnliches Ausführungsbeispiel zu Figur 3 dargestellt, jedoch sind hier beide Bleche 41, 42 etwa sinusförmig gewellt, wenn auch wie oben mit unterschiedlicher Wellenlänge und Amplitude. In Figur 4 ist die Amplitude des schwächer gewellten Bleches 41 stark übertrieben, um das Prinzip zu verdeutlichen. Beim spiraligen Aufwickeln solcher Bleche ändern sich wegen des zunehmenden Umfangs der einzelnen Lagen die Konstellationen der Berührungspunkte 45 der Bleche, was jedoch in der Summe die Eigenschaften des entstehenden Katalysatorträgerkörpers nicht beeinträchtigt.

Die in der Zeichnung begradigt dargestellten Abschnitte zeigen das Wesen der Erfindung in idealisierter Form. Beim Aufwickeln derart strukturierter Bleche kann sich die Zahl der Berührungspunkte wieder erhöhen, jedoch bleiben genügend Freiräume vorhanden, um eine Elastizität des gewickelten Körpers sicherzustellen.

Die erfindungsgemäßen Katalysatorträgerkörper weisen eine gegenüber herkömmlichen Typen verlängerte Lebensdauer auf, da sie selbst beim Einbau in ein massives Mantelrohr durch ihre Elastizität Dehnungen besser aufnehmen können. Dabei genügt es meist, nun einen relativ kleinen Bereich, beispielsweise 5 - 10 Lagen, vorzugsweise im Außenbereich, erfindungsgemäß mit Mehrfachstruktur zu versehen, während die übrigen Bereiche wie bisher geformt sein können. Für solche Fälle eignen sich für die Herstellung der Mehrfachstruktur z. B. zuschaltbare Zahnwalzen, die bei Bedarf eines der Blechbänder mit einer zusätzlichen (langwelligeren) Wellenstruktur versehen.

## Patentansprüche

1. Aus zwei abwechselnden Blechlagen (11, 12 ; 21, 22 ; 31, 32 ; 41, 42) unterschiedlicher Struktur gewickelter oder geschichteter metallischer Katalysatorträgerkörper, wobei eine erste Blechlage (12 ; 22 ; 32 ; 42) eine erste Wellung mit einer ersten Amplitude ($A_1$ ; $A_4$) und einer ersten Wellenlänge ($\lambda_1$, $\lambda_4$) aufweist, welche im wesentlichen die Wabenstruktur des Katalysatorträgerkörpers bestimmt, und wobei weiter mindestens eine zweite Wellung zumindest in Teilbereichen des Katalysatorträgerkörpers vorhanden ist mit einer zweiten Amplitude ($A_2$ ; $A_3$) und einer zweiten Wellenlänge ($\lambda_2$ ; $\lambda_3$), welche der ersten Wellung hinzugefügt ist und/oder die Struktur der zweiten Blechlage (11 ; 21 ; 31 ; 41) bildet, dadurch gekennzeichnet, daß nur ein Teil der Wellenberge der ersten Wellung der ersten Blechlage (12 ; 22 ; 32 ; 42) die zweite Blechlage (11 ; 21 ; 31 ; 41) berührt, indem die Amplitude ($A_1$ ; $A_4$) der ersten Wellung größer ist als die Amplitude ($A_2$ ; $A_3$) der zweiten Wellung und gleichzeitig die Wellenlänge ($\lambda_1$ ; $\lambda_4$) der ersten Wellung ungefähr gleich oder kleiner ist als die der zweiten Wellung.

2. Katalysatorträgerkörper nach Anspruch 1, dadurch gekennzeichnet, daß die zweite Blechlage (11 ; 21) ein glattes Blech und die erste (12 ; 22) ein doppelt gewelltes Blech ist.

3. Katalysatorträgerkörper nach Anspruch 2, dadurch gekennzeichnet, daß die erste, doppelt gewellte Blechlage (12) die Struktur zweier überlagerter Wellen (16, 17) aufweist, deren erste (16) eine erheblich größere Amplitude ($A_1$) hat als die zweite (17) und wobei die Wellenlänge ($\lambda_2$) der zweiten (17) ein Vielfaches der halben Wellenlänge ($\lambda_1$) der ersten Welle (16) beträgt.

4. Katalysatorträgerkörper nach Anspruch 2, dadurch gekennzeichnet, daß die erste, doppelt gewellte Blechlage (22) die Struktur zweier sich abwechselnder Wellen (26, 27) unterschiedlicher Amplituden ($A_3$, $A_4$) und eventuell unterschiedlicher Wellenlängen ($\lambda_3$, $\lambda_4$) aufweist, wobei sich jeweils eine halbe Wellenlänge oder Vielfache davon jeder der Wellen (26, 27) abwechseln.

5. Katalysatorträgerkörper nach Anspruch 1, dadurch gekennzeichnet, daß die erste und die zweite Blechlage (31, 32 ; 41, 42) Wellenstrukturen aufweisen, wobei die Amplitude der Wellenstruktur der zweiten Blechlage (31 ; 41) viel kleiner ist als die Amplitude der Wellenstruktur der ersten Blechlage (32 ; 42) und wobei die Wellenlänge der Wellenstruktur der zweiten Blechlage (31 ; 41) erheblich größer ist als die Wellenlänge der Wellenstruktur der ersten Blechlage (32 ; 42).

6. Katalysatorträgerkörper nach einem der vorhergehenden Ansprüche, dadurch gekennzeichnet, daß die Berührungsstellen (15 ; 25 ; 35 ; 45) der Blechlagen (11, 12 ; 21, 22 ; 31, 32 ; 41, 42) fügetechnisch verbunden sind, vorzugsweise verlötet.

## Claims

1. Metallic catalyst carrier body, wound or layered from two alternating metal sheet layers (11, 12 ; 21, 22 ; 31, 32 ; 41, 42) of differing structure, wherein a first metal sheet layer (12 ; 22 ; 32 ; 42) has a first corrugation with a first amplitude ($A_1$ ; $A_4$) and a first wavelength ($\lambda_1$, $\lambda_4$), which essentially determines the honeycomb structure of the catalyst carrier body, and furthermore, at least one second corrugation is present at least in partial areas of the catalyst carrier body, with a second amplitude ($A_2$ ; $A_3$) and a second wavelength ($\lambda_2$ ; $\lambda_3$), which is added to the first corrugation and/or forms the structure of the second metal sheet layer (11 ; 21 ; 31 ; 41), characterised in that only one portion of the wave crests of the first corrugation of the first metal sheet layer (12 ; 22 ; 32 ; 42) contacts the second metal sheet layer (11 ; 21 ; 31 ; 41), while the amplitude ($A_1$ ; $A_4$) of the first corrugation is greater than the amplitude ($A_2$ ; $A_3$) of the second corrugation and at the same time the wavelength ($\lambda_1$ ; $\lambda_4$) of the first corrugation is approximately equal to or smaller than that of the second corrugation.

2. Catalyst carrier body according to claim 1, characterised in that the second metal sheet layer (11 ; 21) is a smooth metal sheet and the first (12 ; 22) is a double-corrugated metal sheet.

3. Catalyst carrier body according to claim 2, characterised in that the first, double-corrugated metal sheet layer (12) has the structure of two superimposed corrugations (16, 17), the first (16) of which has a considerably greater amplitude ($A_1$) than the second (17) and wherein the wavelength ($\lambda_2$) of the second (17) amounts to a multiple of half the wavelength ($\lambda_1$) of the first corrugation (16).

4. Catalyst carrier body according to claim 2, characterised in that the first double-corrugated metal sheet layer (22) has the structure of two alternating corrugations (26, 27) of differing amplitudes ($A_3$, $A_4$) and possibly differing wavelengths ($\lambda_3$, $\lambda_4$), in each case a half wavelength or multiple thereof of each of the corrugations (26, 27) alternating with each other.

5. Catalyst carrier body according to claim 1, characterised in that the first and the second metal sheet layer (31, 32 ; 41, 42) have corrugation structures, in which case the amplitude of the corrugation structure of the second metal sheet layer (31 ; 41) is much smaller than the amplitude of the corrugation structure of the first metal sheet layer (32 ; 42) and the wavelength of the corrugation structure of the second metal sheet layer (31 ; 41) is considerably greater than the wavelength of the corrugation structure of the first metal sheet layer (32 ; 42).

6. Catalyst carrier body according to one of the preceding claims, characterised in that the contact points (15 ; 25 ; 35 ; 45) of the metal sheet layers (11, 12 ; 21, 22 ; 31, 32 ; 41, 42) are connected by joining techniques, preferably brazed.

## Revendications

1. Support métallique de catalyseur, constitué de deux bandes de tôle alternées (11, 12, 21, 22 ; 31, 32 ; 41, 42) de structure différente, enroulées ou empilées, une première bande de tôle (12 ; 22 ; 32 ; 42) ayant une première ondulation, d'une première amplitude ($A_1$ ; $A_4$) et d'une première longueur d'onde ($\lambda_1$, $\lambda_4$), qui détermine pour l'essentiel la structure en nid d'abeilles du support de catalyseur et il est prévu, en outre, au moins une deuxième ondulation, au moins dans des régions partielles du support de catalyseur, ayant une deuxième amplitude ($A_2$ ; $A_3$) et une deuxième longueur d'onde ($\lambda_2$ ; $\lambda_3$), qui est ajoutée à la première ondulation et/ou qui forme la structure de la seconde bande de tôle (11 ; 21 ; 31 ; 41), caractérisé en ce que seulement une partie des sommets de la première ondulation de la première bande de tôle (12 ; 22 ; 32 ; 42) touche la deuxième bande de tôle (11 ; 21 ; 31 ; 41), l'amplitude ($A_1$ ; $A_4$) de la première ondulation étant supérieure à l'amplitude ($A_2$ ; $A_3$) de la deuxième ondulation et, en même temps, la longueur d'onde ($\lambda_1$ ; $\lambda_4$) de la première ondulation étant sensiblement égale ou étant inférieure à celle de la deuxième ondulation.

2. Support de catalyseur suivant la revendication 1, caractérisé en ce que la deuxième bande de tôle (11 ; 21) est une tôle lisse et la première (12 ; 22) est une tôle à double ondulation.

3. Support de catalyseur suivant la revendication 2, caractérisé en ce que la première bande de tôle (12) à double ondulation possède la structure de deux ondes (16, 17) superposées, dont la première (16) a une amplitude considérablement plus grande que la seconde (17) et la longueur d'onde ($\lambda_2$) de la seconde onde (17) est un multiple de la moitié de la longueur d'onde ($\lambda_1$) de la première onde (16).

4. Support de catalyseur suivant la revendication 2, caractérisé en ce que la première bande de tôle (22) à double ondulation, présente la structure de deux ondes alternées (26, 27) d'amplitudes différentes ($A_3$, $A_4$) et éventuellement de longueurs d'ondes différentes ($\lambda_3$, $\lambda_4$) avec alternance d'une demi-longueur ou d'un multiple de celle-ci de chacune des ondes (26, 27).

5. Support de catalyseur suivant la revendication 1, caractérisé en ce que la première et la seconde bandes de tôle (31, 32 ; 41, 42) ont des structures ondulées, l'amplitude de la structure ondulée de la seconde bande de tôle (31, 41) étant bien plus petite que l'amplitude de la structure ondulée de la première bande de tôle (32, 42) et la longueur d'onde de la structure ondulée de la seconde bande de tôle (31 ; 41) étant considérablement plus grande que la longueur d'onde de la structure ondulée de la première bande de tôle (32 ; 42).

6. Support de catalyseur suivant l'une des revendications précédentes, caractérisé en ce que les points de contacts (15 ; 25 ; 35 ; 45) des bandes de tôle (11, 12 ; 21, 22 ; 31, 32 ; 41, 42) sont reliées par la technique d'assemblage, en étant de préférence soudées.

FIG 1

FIG 2

FIG 3

FIG 4

FIG 5

FIG 6